(19) **Europäisches Patentamt**

**European Patent Office**

**Office européen des brevets**

(11) **EP 0 627 693 B1**

(12) **FASCICULE DE BREVET EUROPEEN**

(45) Date de publication et mention
de la délivrance du brevet:
**17.11.2004 Bulletin 2004/47**

(51) Int Cl.⁷: **G06T 5/00**

(21) Numéro de dépôt: **94201175.0**

(22) Date de dépôt: **28.04.1994**

(54) **Dispositif de segmentation d'images composées de textures**

Vorrichtung zur Segmentierung von aus Texturen bestehenden Bildern

Apparatus for segmenting images composed of textures

(84) Etats contractants désignés:
**DE FR GB**

(30) Priorité: **05.05.1993 FR 9305365**
**15.09.1993 FR 9310998**

(43) Date de publication de la demande:
**07.12.1994 Bulletin 1994/49**

(73) Titulaire: **Koninklijke Philips Electronics N.V.**
**5621 BA Eindhoven (NL)**

(72) Inventeur: **Oddou, Christophe**
**F-75008 Paris (FR)**

(74) Mandataire: **Landousy, Christian et al**
**Société Civile SPID,**
**156, Boulevard Haussmann**
**75008 Paris (FR)**

(56) Documents cités:
**EP-A- 0 087 284      FR-A- 2 660 459**

- **ICAASP-89: 1989 INTERNATIONAL CONFERENCE ON ACCOUSTICS, SPEECH AND SIGNAL PROCESSING. vol. 3 , 23 Mai 1989 , GLASGOW, UK, pages 1707 - 1710 FOUQUES J - Y & COHEN P 'Partitin Filters: A New Class of Morphologocal Operators for Segmenting Textured Images.'**
- **PROCEEDINGS OF THE SPIE - CONFERENCE: NONLINEAR IMAGE PROCESSING, vol. 1658 , 12 Février 1992 , SAN JOSE, CA, USA, pages 139 - 150 RIVEST J F ET AL. 'Morphological Gradients.'**
- **VISUAL COMMUNICATIONS & IMAGE PROCESSING '92, vol. 1818-3 , 18 Novembre 1992 , BOSTON, MA, USA. pages 1135 - 1145 SHEN D - F & RAJALA S A 'Segmentation-based Texture Coding Algorithm for Packet Video: A Goal Oriented Approach.'**
- **PROCEEDINGS OF THE NATINAL SCIENCE CONCIL, REPUBLIC OF CHINA, PART A (PHISYCAL SCIENCE & ENGINEERING), vol. 16, no. 5 , Septembre 1992 , TAIWAN pages 403 - 421 LING - HWEI CHEN & YU KUNG CHEN '"A High-Compression Image Coding Method Based on a New Segmentation Technique.'**
- **Meyer F., Beucher S., Morphological Segmentation, Journal of Visual Communication and Image Representation, Sept. 1990, USA, pp. 21-46**

# Description

La présente invention concerne un dispositif de segmentation d'images composées de textures à partir de signaux numériques représentatifs desdites images et par caractérisation de chaque texture à l'aide de paramètres qui en sont représentatifs et décomposition de chaque image en régions associées aux différentes textures, ledit dispositif comprenant :

(A) pour ladite caractérisation de texture, un sous-ensemble (100) de filtrage morphologique directionnel suivi d'un sous-ensemble (200) de détermination de paramètres de texture ;
(B) en sortie dudit sous-ensemble de détermination de paramètres, un sous-ensemble (300) de segmentation en régions, par la technique dite d'extraction de lignes de partage des eaux appliquée à une image de paramètres de texture subdivisée en blocs de taille déterminée ;
(C) un étage (600) de séquencement, pour la fourniture des différents signaux de commande desdits sous-ensembles.

Cette invention est utilisable par exemple pour le prétraitement d'images avant leur transmission et/ou leur stockage.

La transmission ou le stockage d'images en des temps très courts nécessite des débits très élevés qui, en général, ne sont pas envisageables, aussi bien pour des raisons économiques que techniques. Il est donc indispensable de comprimer les informations à transmettre (ou à stocker). Les techniques actuelles de compression de données reposent soit, de façon classique, sur un traitement des signaux par transformation orthogonale, avec des taux de compression voisins de 10, soit, dans une autre perspective fondée sur une meilleure analyse des images concernées et conduisant à des taux de compression supérieurs, sur un prétraitement desdites images qui consiste à les considérer comme constituées d'un ensemble de régions homogènes définies chacune par un contour et une texture interne.

Un tel prétraitement des images, décrit par exemple dans le document "Segmentation adaptative pour le codage d'images", thèse de doctorat n°691 (1987) présentée par Mr R. Leonardi au Département d'Electricité de l'Ecole Polytechnique Fédérale de Lausanne, permet d'obtenir une segmentation correcte en régions homogènes lorsque la luminance varie faiblement dans chacune de ces régions, mais conduit à une forte sur-segmentation lorsque lesdites régions correspondent à des textures du type herbe, raffia, bois, etc... ou, d'une manière générale, à des zones où peut être observée une sorte d'aspect structuré et plus ou moins périodique, défini par un grain primaire et une ou des lois d'agencement ou de répétition de ce grain sur toute une surface. Pour le traitement de telles textures, la demande de brevet français n°2660459, qui souligne dans son introduction la diversité des procédés de segmentation connus à ce jour selon le type de texture rencontré, propose cependant une méthode de segmentation susceptible de convenir quel que soit le type de l'image et qui comprend notamment les étapes de base suivantes : caractérisation de chaque texture par un ensemble de paramètres formant un vecteur prototype, et classification par décomposition de l'image en régions associées aux différentes textures, avec fusion éventuelle des régions obtenues.

Le but de l'invention est de proposer un dispositif de segmentation d'images comprenant des textures qui, tout en respectant ces étapes de base, en propose une mise en oeuvre tout à fait nouvelle.

A cet effet, l'invention concerne un dispositif de segmentation tel que défini dans le paragraphe introductif et caractérisé en ce que

(A) ledit sous-ensemble (100) de filtrage morphologique directionnel comprend :

(a) une première mémoire (10) des signaux numériques représentatifs de l'image à segmenter ;
(b) en sortie de cette première mémoire, un premier commutateur (5) à quatre positions suivi, en parallèle, de quatre circuits de filtrage morphologique directionnel (11, 12, 13, 14) ;
(c) une deuxième mémoire (20) de stockage des quatre images filtrées successivement obtenues ;
(d) un soustracteur (25) et, en sortie de celui-ci, une troisième mémoire (30) de stockage de quatre images de résidu obtenues successivement par différence entre l'image originale et chacune des quatre images filtrées ;

(B) ledit sous-ensemble (200) de détermination de paramètres de texture comprend :

(e) un circuit (35) d'intégration des images de résidu ;
(f) en sortie de celui-ci, un deuxième commutateur (36) à quatre positions, suivi de quatre branches en parallèle comprenant elles-mêmes chacune, en série, une quatrième mémoire de stockage de l'image de caractéristiques de texture associée au filtrage correspondant, un circuit de sous-échantillonnage spatial de cette image, un circuit de calcul de gradient morphologique, et une cinquième mémoire de stockage dudit gradient ;
(g) un additionneur (59) des sorties desdites cinquièmes mémoires ;
(h) une sixième mémoire (60) de stockage du gradient dit global présent en sortie dudit additionneur.

La structure de dispositif ainsi proposée est originale pour la raison suivante. La morphologie mathématique, qui possède, pour effectuer de la segmentation d'image, un outil très efficace dit technique de la ligne de partage des eaux, utilise habituellement cet outil sur des images à teintes de gris non texturées, c'est-à-dire pour isoler des zones à luminance pratiquement ou relativement constante. Dans le cas d'images composées de textures, cette technique n'est en principe pas applicable, puisque les zones correspondant à chaque texture ne sont pas à luminance constante, mais la difficulté ainsi apparue a pu être contournée en reconstituant, par l'intermédiaire de prétraitements originaux, des images auxquelles peuvent être appliqués les opérateurs morphologiques.

Dans une variante de réalisation plus perfectionnée, le dispositif de segmentation selon l'invention est en outre caractérisé en ce qu'il comprend, en sortie du sous-ensemble de segmentation, un sous-ensemble d'affinement de contours par renouvellement d'extractions de lignes de partage des eaux pour des subdivisions de l'image en blocs de taille plus faible, et ceci de façon itérative jusqu'à la résolution d'un point d'image.

Les particularités et avantages de l'invention apparaîtront maintenant de façon plus détaillée dans la description qui suit et dans les dessins annexés, donnés à titre d'exemples non limitatifs et dans lesquels :

- les figures 1 à 4 illustrent différentes différentes transformations morphologiques de base d'une fonction par un élément structurant ;
- les figures 5 et 6, une fois associées, montrent ensemble un exemple de réalisation d'un dispositif de segmentation conforme à l'invention ;
- les figures 7 et 8 illustrent, dans le fonctionnement du dispositif selon l'invention, la façon dont est réalisé le filtrage morphologique du gradient global par érosion géodésique ;
- les figures 9 et 10 montrent deux exemples de réalisation d'un système de segmentation.

Avant de décrire ci-après les exemples de réalisation représentés, quelques rappels relatifs aux textures et aux techniques qui permettent d'analyser celles-ci sont utiles. Bien qu'il n'existe pas de stricte définition de la notion de texture, on peut qualifier de la sorte toute région qui, quelle qu'en soit la zone observée, fournit une même impression visuelle, en ajoutant cependant que la texture ainsi observée peut être considérée comme une macro-texture ou au contraire comme une micro-texture selon la distance à laquelle on l'observe. Une macro-texture semble pouvoir être définie par un motif de base -une sorte de grain- et par des règles d'agencement de ce motif dans l'espace, par répétition plus ou moins régulière par exemple. Une telle texture a un aspect relativement structuré et périodique, et donc ordonné, mais, vue de plus loin, cette structure et cette périodicité peuvent disparaître, et l'aspect devient au contraire désordonné.

Cette difficulté à décrire formellement un motif de base et ses règles d'agencement a conduit à rechercher des caractéristiques de texture plus facilement calculables. Cette recherche passe par des étapes successives d'analyse, pour extraire des paramètres caractéristiques de la ou des textures concernées, et de segmentation, pour partager une image en régions de caractéristiques de texture homogènes, ces étapes étant souvent suivies d'une étape de synthèse qui a pour objectif de restituer les textures, par exemple à partir des paramètres qui ont été extraits initialement pour chaque région.

Les techniques de segmentation utilisées recherchent en général à déceler dans une image des discontinuités ou au contraire des similarités des caractéristiques d'image, ce qui revient donc à reproduire le plus précisément possible les contours réels des objets (c'est-à-dire les discontinuités dans l'image) tout en minimisant le nombre de régions de manière à éviter de constituer des frontières artificielles ne correspondant pas à une discontinuité. La morphologie mathématique, en particulier, possède une technique très efficace pour effectuer de la segmentation d'image, mais seulement dans des applications où les images concernées sont à teintes de gris non texturées, correspondant à des objets de luminance relativement constante. Cette technique dite de la ligne de partage des eaux (et notée LPE par abréviation par la suite, ou WSL en anglais) est décrite en particulier dans le document "Morphological segmentation", de F.Meyer et S. Beucher, paru dans la revue "Journal of Visual Communication and Image Representation", Vol.1, n°1, septembre 1990, pp.21-46.

Pour mieux comprendre la morphologie mathématique et, plus particulièrement, cette technique LPE, il est judicieux de se représenter la fonction de luminance comme un relief, les points des images à niveaux de gris apparaissant d'autant plus clairs qu'ils sont plus élevés. Il en est de même pour le gradient de cette fonction de luminance, et, dans ce relief, les lignes de crête du gradient correspondent aux frontières des régions à segmenter. Une image peut alors être considérée comme une juxtaposition de bassins au fond desquels se trouve un minimum local, une sorte de plateau formé de points d'altitude sensiblement uniforme et dont tous les points voisins sont d'altitude supérieure. Si l'on perce un trou à l'endroit de chaque minimum local, puis que l'on procède à une inondation progressive du relief à partir des minima locaux en veillant à ce que le niveau des eaux monte à vitesse constante, on peut, chaque fois que les eaux issues de deux minima locaux se rencontrent, construire une digue le long de la ligne de crête correspondant à cette ligne de rencontre, de façon que les eaux issues des deux bassins distincts correspondants ne se mélangent pas.

La segmentation ainsi obtenue par cette technique LPE ne peut cependant être appliquée aux images texturées, puisque celles-ci n'ont pas une luminance constante. Les travaux menés par la société demanderesse ont alors consisté à tenter d'employer quand même cette technique, non plus sur une image de luminance mais sur une image construite à partir de paramètres de texture correctement sélectionnés. En effet, pour une image d'origine subdivisée en blocs de points d'image (ou pixels), ces blocs ont des paramètres de texture voisins s'ils appartiennent à une même texture. Par conséquent, dans des images qui ne sont plus les images d'origine mais des images de paramètres construites à partir de ces images d'origine, les blocs de pixels d'une même texture sont alors caractérisés par des niveaux de gris très proches les uns des autres. Il est donc possible d'appliquer la technique LPE non plus à la luminance, mais à une autre grandeur, à savoir l'un de ces paramètres et par exemple, dans l'application décrite ci-après, au gradient morphologique G, dont la définition va être précisée plus loin.

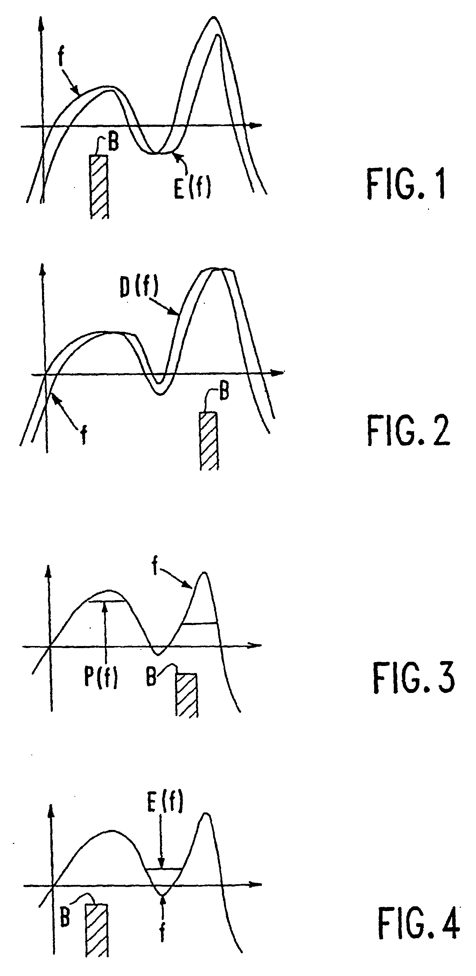

Il est utile en effet de rappeler ici, préalablement, les principaux outils morphologiques utilisés à l'heure actuelle pour l'exploration de la structure géométrique des images. La transformation morphologique d'une image binaire représentée par un ensemble de données discrètes, noté X et défini dans l'espace N des nombres entiers relatifs, fait appel à un élément structurant noté B et qui, choisi en fonction du problème posé (forme, dimension, orientation, etc...), a pour rôle d'interagir avec l'image pour en extraire des informations géométriques utiles. Les différentes transformations de base qu'autorise un tel élément structurant B sont l'érosion et la dilatation, illustrées sur les figures 1 et 2, ainsi que l'ouverture et la fermeture qui en sont des combinaisons (et illustrées, elles, sur les figures 3 et 4).

L'érosion morphologique d'une image X par un élément structurant B est définie ici par la notation X(-)B et a pour effet de rétrécir cette image. On peut noter ce rétrécissement de la façon suivante :

$$X(-)B = [X + (-b)]$$

où X + (-b) est le résultat d'une translation de valeur b de l'image X. L'image résultante est par exemple notée :

$$Y = \text{"érodé Y de X par B"} = E^B(X)$$

De même, la dilatation morphologique de X par B est définie ici par la notation X(+)B et a pour effet de dilater l'image, cette dilatation pouvant là aussi être notée [X + (+b)] et correspondant, comme précédemment, à une translation de valeur b de l'image X mais en direction opposée, de façon à obtenir une image Y notée :

$$Y = \text{"dilaté Y de X par B"} = D^B(X).$$

Ces deux opérations de base peuvent être associées pour opérer des transformations morphologiques plus complexes. L'ouverture d'une image X par un élément structurant B, définie ici par la notation [X(-)B](+)B consiste à opérer une érosion suivie d'une dilatation, et son image résultante est par exemple notée :

$$P = D^B [E^B(X)]$$

De même la fermeture d'une image X par B, définie par la notation [X(+)B] (-)B et dont l'image résultante est notée :

$$F = E^B[D^B(X)]$$

consiste à opérer une dilatation suivie d'une érosion.
Ces deux dernières transformations ont pour effet de lisser les contours des ensembles sur lesquels elles agissent. En effet une ouverture supprime sur les contours les proéminences qui sont de dimension inférieure à celle de l'élément structurant, et une fermeture obture sur ces contours les puits de dimension inférieure à celle de l'élément structurant. D'une façon générale, ces deux transformations éliminent donc les composantes plus petites que l'élément structurant utilisé.
Les opérateurs ainsi définis pour des frontières géométriques simples et dans le cas d'images binaires peuvent être généralisés à des images à teintes de gris. Si (x,y) définit la position d'un pixel X de l'image de niveau de gris a(x,y), le niveau de gris érodé E(x,y) de X par B est donné par l'expression :

$$E(x,y) = \min [a (x-i, y-j) - b(-i,-j)]$$

où b(i,j) = 0 ou - ∞ (moins l'infini) selon que (i,j) appartient à B ou non. Le niveau de gris dilaté D(x,y) de X par B est de même donné par l'expression duale :

$$D(x,y) = \max [a (x+i, y+j) + b(i,j)]$$

Comme le montrent les exemples des figures 1 et 2, illustrant respectivement l'érosion et la dilatation d'une fonction f par un élément structurant plan B, l'érosion a tendance à atténuer les crêtes du relief, c'est-à-dire à supprimer les taches claires, de faible épaisseur, et la dilatation a tendance à combler les vallées, c'est-à-dire à supprimer les taches sombres, de faible épaisseur également. De même, en teinte de gris, l'ouverture P et la fermeture F d'une fonction f par l'élément structurant B, illustrées sur les figures 3 et 4 et notées respectivement :

$$P(x,y) = \sup [E^B (f(u,v))]$$

$$F(x,y) = \inf [D^B (f(u,v))]$$

avec (u,v) appartenant à B, ont pour effet respectif de supprimer les pics de luminance et les creux de luminance dont la taille est inférieure à celle de l'élément structurant, tout en laissant pratiquement inchangées les autres formes.

On peut enfin définir, parmi d'autres types de transformations, le gradient morphologique G, qui est donné par l'expression :

$$G(f) = [(f(+)B) - (f(-)B)]/2$$

et qui correspond donc, en quelque sorte, à la demi-différence entre le dilaté de f par B et l'érodé de f par B.

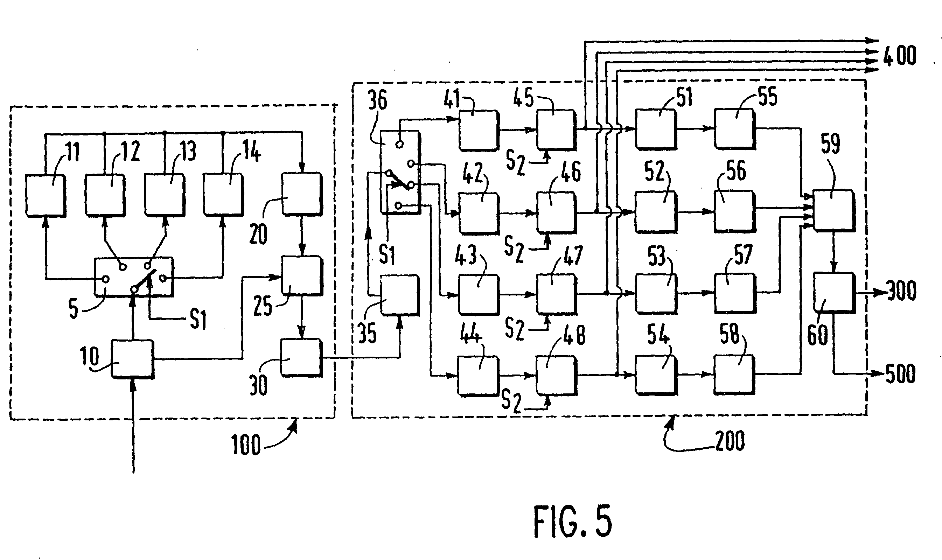

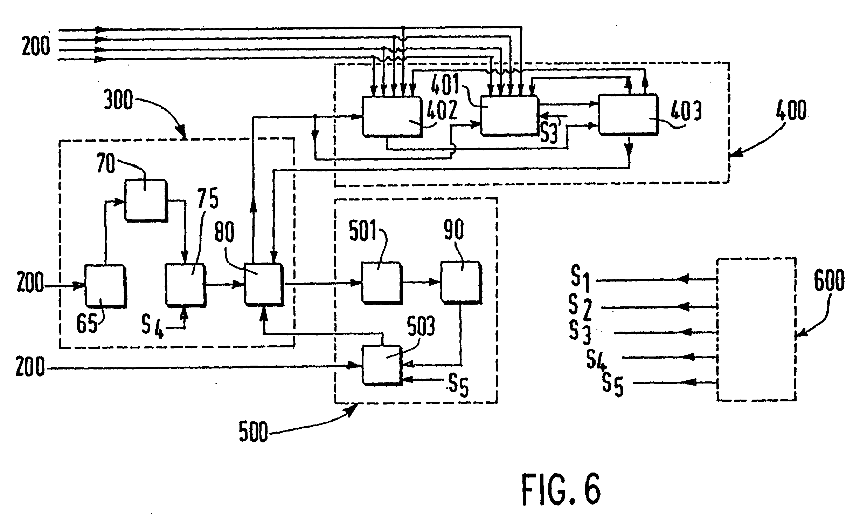

Ces rappels relatifs aux textures et aux techniques de transformation morphologique étant effectués, on peut maintenant décrire le dispositif de segmentation d'images selon l'invention. Ce dispositif, représenté sur les figures 5 et 6 à considérer en association, comprend tout d'abord un sous-ensemble 100 de filtrage morphologique directionnel. Ce sous-ensemble 100 comprend lui-même une première mémoire 10 de stockage des signaux numériques représentatifs de l'image (à segmenter, ici, en fonction des différentes textures qu'elle contient). La sortie de cette mémoire 10 est ici reliée à l'entrée commune d'un premier commutateur 5 à quatre positions, suivi, sur ses quatre sorties en parallèle, de quatre circuits 11, 12, 13, 14 de filtrage morphologique directionnel. Les quatre circuits de filtrage 11 à 14 permettent de réaliser sur l'image quatre transformations composées ici, chacune, successivement d'une ouverture et d'une fermeture et pour lesquelles l'élément structurant est plan, d'épaisseur 1 pixel, de longueur 3 pixels et d'orientation 0°, 45°, 90°, et 135° respectivement. Les quatre images filtrées sont successivement stockées dans une deuxième mémoire 20. Une troisième mémoire 30 permet de stocker pour chaque élément structurant l'image dite de résidu obtenue en sortie d'un soustracteur 25 par différence entre l'image originale stockée dans la mémoire 10 et chacune des images filtrées stockées dans la mémoire 20 (chaque résidu est donné par la valeur absolue de cette différence). La valeur de ce résidu pour chaque pixel et pour chacun des quatre filtrages morphologiques constitue un paramètre de texture, et l'on pourrait bien entendu établir autant de cartes de paramètres de texture qu'il y a de variantes de tels filtrages.

A ce point de la mise en oeuvre du dispositif des figures 5 et 6, chaque pixel de l'image est donc remplacé par quatre informations dont le regroupement peut être considéré comme un vecteur à quatre composantes. Cependant, une texture ne peut pas être définie à partir d'attributs ponctuels, car un seul pixel n'est représentatif ni du grain ni des règles d'agencement de la structure, et il faut faire appel au voisinage de ce pixel.

Pour pouvoir extraire de façon objective des caractéristiques de texture, il est nécessaire de connaître un échantillon de celle-ci, et d'une taille suffisante pour pouvoir reconnaître effectivement la portion de texture présente.

Il est prévu à cet effet, en sortie du sous-ensemble 100, un sous-ensemble 200 de détermination de paramètres de texture. Ce sous-ensemble 200 comprend tout d'abord un circuit 35 d'intégration de l'image de résidu, prévu en sortie de la troisième mémoire 30 et qui permet de constituer des zones homogènes où la valeur des composantes vectorielles est pratiquement constante sur de larges plages. La taille m x n de la fenêtre d'intégration est bien entendu fonction du type de l'image d'origine : dans le cas présent, on a retenu une dimension de fenêtre de 24 x 24 pixels, pour des images qui sont constituées de 512 x 512 pixels, mais il est manifeste que la présence de macro-textures dans l'image nécessiterait une résolution plus élevée pour que les fenêtres puissent contenir toute l'information de texture. D'autre part, l'intégration ainsi réalisée est ici un simple calcul de moyenne, mais on pourrait par exemple pondérer dans un tel calcul l'influence de chaque pixel en fonction de sa distance au centre de la fenêtre.

La sortie du circuit d'intégration 35 est reliée à l'entrée commune d'un deuxième commutateur 36 dont les sorties non communes, ici au nombre de quatre, sont reliées à quatre branches en parallèle comprenant elles-mêmes en série tout d'abord des mémoires 41 à 44 dites quatrièmes et des circuits de sous-échantillonnage 45 à 48. Les mémoires 41 à 44 permettent de disposer successivement, en parallèle, de quatre images de caractéristiques de texture correspondant à chacun des quatre filtrages morphologiques effectués. Les circuits de sous-échantillonnage 45 à 48 permettent d'effectuer respectivement un sous-échantillonnage spatial de ces images, tous les p x q pixels dans les directions horizontale et verticale respectivement, et chaque bloc de p x q pixels est donc remplacé maintenant par un sous-échantillon qu'on appellera macropixel dans la suite de la description (dans l'exemple décrit, on prend p = q = 16). A chacun de ces macropixels est associée la valeur prélevée dans les mémoires 41 à 44 et correspondant à la valeur moyenne des paramètres de textures obtenue après intégration sur la fenêtre choisie. Ce sous-échantillonnage permet d'effectuer maintenant toutes les opérations ultérieures à la résolution p x q, l'entité élémentaire étant le bloc p x q et non plus le pixel. A l'intérieur d'un tel bloc, il faut préciser qu'on a choisi d'effectuer un simple calcul de valeur moyenne, mais que d'autres calculs plus complexes peuvent être adoptés. On peut là aussi, notamment pour affiner les frontières entre blocs, pondérer la contribution de chaque pixel en fonction de sa distance au centre du bloc, selon une loi gaussienne par exemple.

Dans les quatre branches en parallèle sont ensuite prévus quatre circuits 51 à 54 de calcul de gradient morphologique, puis quatre mémoires 55 à 58 de stockage des gradients ainsi calculés, dites cinquièmes mémoires. Les sorties de ces cinquièmes mémoires constituent celles des quatre branches et sont fournies à un nombre identique d'entrées d'un additionneur 59 délivrant un gradient global $G_G$ qui est stocké dans une sixième mémoire 60. On a exposé précédemment d'une part en quoi consistait la technique LPE et d'autre part le choix technique effectué d'appliquer cette technique à des images construites à partir de paramètres de texture pertinents et, plus particulièrement, à partir du gradient morphologique G. En effet, à l'intérieur d'une texture, les variations du gradient G sont relativement peu importantes, alors qu'au niveau des frontières entre régions de textures différentes, le gradient global est plus élevé (d'autant plus que le contraste est plus grand entre ces régions).

La segmentation proprement dite est maintenant réalisée dans un sous-ensemble 300 de segmentation. Cette segmentation par la technique LPE se décompose en deux étapes, la première consistant à marquer les régions que l'on veut extraire, et la seconde à délimiter de façon définitive les régions d'image. Un marqueur, qui est un petit ensemble de pixels inclus dans la région et constituant en quelque sorte le germe de développement de celle-ci, doit correspondre de façon unique à la région qu'il marque. Un bon candidat pour jouer ce rôle de marqueur est le minimum du gradient global G dans chaque région. On peut cependant constater que l'application de la technique LPE à tous les minima locaux détectés conduit à une sur-segmentation relativement importante du fait que certains d'entre eux ne sont pas vraiment significatifs (ils ne sont dûs qu'à de faibles fluctuations du gradient à l'intérieur d'une même texture).

Pour éviter cette sur-segmentation, on procède, dans le sous-ensemble 300, à un prétraitement qui élimine ces minima non significatifs. Ce prétraitement est réalisé ici à l'aide d'un circuit 65 de filtrage morphologique par érosion géodésique. On précise ici, en complément aux rappels effectués plus haut relativement à quelques opérateurs de base de la morphologie mathématique, que la distance géodésique $d_Z(x,y)$ entre deux points x et y d'un ensemble Z est la borne inférieure des différentes longueurs de chemin possibles entre x et y dans Z. Cette distance peut être notée $d_Z(x,y)$ = inf [longueurs C(x,y)], où C désigne un chemin quelconque dans Z entre x et y (entre deux points situés dans deux bassins distincts, tels qu'on les obtiendrait par la technique LPE, cette distance est donc conventionnellement considérée comme infinie, puisque ces deux points ne peuvent pas être joints). On appelle alors boule géodésique de rayon R centrée en x l'ensemble S(x, r) des points y appartenant au même ensemble Z et tels que leur distance géodésique $d_Z(x,y)$ au point x est inférieure ou égale au rayon R. Sur une telle boule géodésique, on peut alors procéder, à l'aide d'un élément structurant B, à une érosion ou à une dilatation, telles que ces deux transformations morphologiques ont été définies précédemment, et avec le même effet de lissage de la surface de la boule.

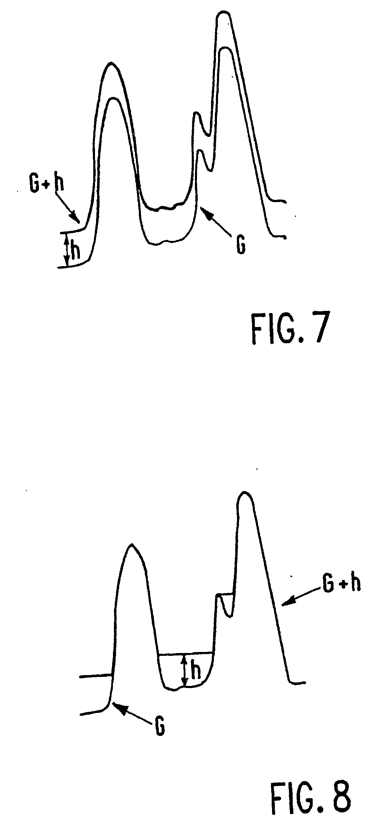

Dans la réalisation ici décrite, on choisit de ne conserver les minima locaux que sous contrainte d'une hauteur h. La figure 7 montre un exemple de fonction G (gradient global) au-dessus de laquelle a été construite la fonction G + h, où h est une constante positive, et la figure 8 montre, par rapport à la fonction G initiale, la fonction finalement obtenue après érosion géodésique par le circuit 65. Une septième mémoire 70 prévue en série avec ce circuit 65 assure le stockage de l'image de gradient ainsi filtrée (dans cette image finalement obtenue, le prétraitement a, en fait, consisté à supprimer les vallées dont la hauteur est inférieure à h et à combler les autres d'une hauteur h). La sortie de la mémoire 70 est fournie à un premier circuit 75 de segmentation par calcul de ligne de partage des eaux (il s'agit de l'application directe de la technique LPE), et cette segmentation initiale fournit une carte ou image de labels (ou étiquettes) qui permet d'identifier les différentes régions issues de ladite segmentation. Cette image de labels est stockée dans une huitième mémoire 80. Le processus de segmentation est terminé, sous réserve d'une fusion éventuelle de régions adjacentes destinée à remédier à une éventuelle sur-segmentation de l'image. Ce processus de fusion est effectué comme indiqué maintenant.

Par un choix approprié de la constante h (valeur pas trop élevée), l'image n'est souvent que modérément sur-segmentée. Cette sur-segmentation peut être réduite en mettant en oeuvre une procédure de regroupement éventuel de régions adjacentes, qui est ici réalisée à l'aide d'un sous-ensemble 400 de fusion de régions. Le traitement de fusion réalisé dans ce sous-ensemble procède selon les étapes suivantes :

(a) établissement d'un classement hiérarchique de régions, dont les éléments successifs sont, par ordre de proximité décroissante, des couples $(R_a, R_b)$ de régions adjacentes ;
(b) pour chacune des paires de régions de ce classement, association (à chacune des deux régions comparées) d'une grandeur représentative de la distribution de ses points ;
(c) décision de fusion, ou non, des deux régions en fonction d'un critère lié auxdites grandeurs représentatives.

Ces étapes peuvent être décrites de façon plus détaillée. Tout d'abord, à partir des informations de délimitation de régions (fournies par la huitième mémoire 80) et des paramètres de texture (ici la valeur moyenne des paramètres de texture sur la fenêtre d'intégration, après sous-échantillonnage), un circuit de classement 401 considère tour à tour toutes les régions adjacentes deux par deux, de la façon suivante. Pour une région $R_i$ déterminée, on appelle $P_i$, prototype de la région $R_i$, le vecteur moyen de l'ensemble des vecteurs de paramètres des blocs constituant la région $R_i$, ce qui peut être énoncé sous la forme :

$$P_i = (1/N_i) \times \Sigma \; p_k$$

où $N_i$ est le nombre de blocs de la région $R_i$ et $p_k$ le vecteur de paramètres du bloc k. Chaque région étant ainsi repérée par un vecteur prototype, la distance $d(R_i, R_j)$ entre la région $R_i$ et chaque région adjacente $R_j$ peut être évaluée, par exemple en utilisant la définition de la distance euclidienne :

$$d(R_i, R_j) \; = \; [\sum_1^N (p_i - p_j)^2]^{1}/2$$

où N est le nombre de composantes de chaque vecteur et où $p_i$ et $p_j$ sont lesdites composantes pour les vecteurs prototypes $P_i$ et $P_j$ respectivement.

Lorsque tous les couples possibles $(R_i, R_j)$ de régions adjacentes ont été rangés en fonction de la distance qui les sépare (quelle que soit la définition adoptée pour cette distance), avec comme premier élément de ce classement le couple $(R_a, R_b)$ dont les vecteurs de paramètres sont les plus proches, un circuit 402 de calcul de grandeur représentative de chaque région opère successivement sur chaque couple $(R_i, R_j)$ dudit classement pour déterminer, pour chacune des deux régions du couple, une grandeur caractérisant la distribution du nuage des points qui forment la région. Cette grandeur, destinée à constituer une sorte d'indice de compacité de la région, sera choisie par exemple égale à l'écart-type S, avec :

$$S^2 \; = \; (1/N_i) \sum_1^{Ni} \; dist^2(P_k, P_i)$$

où Ni est, comme on l'a vu, le nombre de points représentatifs (c'est-à-dire le nombre de blocs) de la région $R_i$ et dist la distance selon la métrique choisie (la distance euclidienne dans l'exemple ci-dessus).

Un circuit de décision 403 autorise alors (ou non) la fusion entre les deux régions d'un couple sur la base d'un critère lié à ces grandeurs représentatives, par exemple lorsque l'inégalité suivante est vérifiée pour deux régions $R_a$, $R_b$ :

$$Dist(R_a, R_b) < min (S_a, S_b),$$

c'est-à-dire lorsque la distance (selon la métrique choisie) entre les deux régions concernées reste inférieure à la plus faible des deux valeurs $S_a$, $S_b$ d'écart-type attachées respectivement à chaque région (cela correspond sensiblement à la situation où le centre de gravité de chaque nuage de points est inclus à l'intérieur de l'autre). La fusion n'est au contraire pas effectuée si l'inégalité n'est pas vérifiée. Lorsqu'il y a fusion des deux régions, un nouveau vecteur prototype est calculé pour la nouvelle région ainsi constituée. Une sortie du circuit 403 est alors envoyée d'une part vers la mémoire 80, pour actualisation des informations de délimitation de régions, et d'autre part vers les circuits 401 et 402, pour actualiser respectivement le rangement effectué par le circuit 401 et le calcul d'écart-type effectué par le circuit 402, et pouvoin ainsi renouveler la succession des décisions de fusion, de reclassement, et de traitement de toutes les paires de régions adjacentes jusqu'à ce que le critère de fusion ne soit plus vérifié.

Ce regroupement éventuel de régions adjacentes met fin définitivement à la segmentation. A l'image initiale est maintenant substituée une partition de cette image en zones de paramètres de texture similaires, la brique de base ou entité élémentaire de cette partition étant, on l'a vu, le bloc d'image de taille p x q. La résolution des frontières de ces zones est donc elle aussi égale à la taille de ces blocs.

Bien entendu, la présente invention n'est pas limitée à l'exemple de réalisation de dispositif représenté sur les figures 5 et 6 ou aux variantes qui ont déjà été mentionnées.

On peut en particulier améliorer la segmentation qui vient d'être réalisée en en augmentant la résolution. En effet, après exécution de la segmentation selon la technique LPE précédemment décrite puis fusion éventuelle des régions, la résolution des frontières des régions issues de ce processus de segmentation et fusion est égale à la taille des blocs d'affectation des paramètres de texture (blocs de 16 x 16 pixels dans l'exemple décrit), ce qui donne à ces frontières une forme en marches d'escalier. On remédie à ce défaut résiduel en mettant en place en sortie du sous-ensemble 400 un sous-ensemble 500 d'affinement de contours (voir la figure 6).

Ce sous-ensemble 500 comprend tout d'abord un circuit 501 d'extraction de marqueurs, suivi d'une neuvième mémoire 90 de stockage de l'image de marqueurs ainsi constituée. En sortie de cette mémoire est prévu un deuxième circuit 503 de segmentation par calcul de lignes de partage des eaux, recevant d'une part l'image de gradient global présente en sortie de la sixième mémoire 60 et d'autre part l'image de marqueurs présente en sortie de cette neuvième mémoire 90. Le fonctionnement de ce sous-ensemble 500 est le suivant. Alors que les images de paramètres de texture et les gradients avaient utilisé jusqu'à présent des macropixels de 16 x 16 pixels, on réduit (par exemple par une division par deux, sans que cet exemple soit limitatif) les dimensions des blocs ainsi constitués et l'on reprend un processus d'extraction de lignes de partage des eaux à partir du nouveau gradient global de résolution améliorée (double dans le cas d'une division des dimensions par deux) et en utilisant comme marqueurs le noyau des régions résultant de la segmentation déjà réalisée (le noyau d'une région est l'ensemble des macropixels de la taille choisie qui ne sont pas sur les contours). Ce processus conduit à une nouvelle image de labels qui se substitue à celle précédemment stockée dans la huitième mémoire 80. On réduit alors à nouveau (par exemple par une nouvelle division par deux) la taille des blocs ou macropixels, pour un nouveau processus d'extraction de lignes de partage des eaux, et ainsi de suite éventuellement jusqu'à la résolution d'un pixel. La segmentation est alors définitivement achevée.

Avec ou sans la mise en place de ces opérations d'affinement de contours, le dispositif de segmentation selon l'invention comprend, dans tous les cas, un étage 600 de séquencement qui constitue la logique de contrôle permettant de délivrer les différents signaux de commande nécessaires. Ces signaux sont les suivants :

(a) un signal $S_1$ de commande de la position des commutateurs qui autorisent les différents filtrages morphologiques et les mémorisations correspondantes des quatre images de caractéristiques de texture ;

(b) un signal $S_2$ qui permet de régler la taille des macropixels, tout d'abord à la taille adoptée pour la première segmentation (ici 16 x 16 pixels), puis aux tailles suivantes (par division de la taille par deux) lors de l'affinement de contours ;

(c) un signal $S_3$ d'initialisation des opérations de fusion éventuelle de régions adjacentes ;

(d) un signal $S_4$ de déclenchement du processus de segmentation par calcul de lignes de partage des eaux, lors de la segmentation initiale ;

(e) un signal $S_5$ de déclenchement du processus de segmentation complémentaire lors de l'affinement des contours des régions obtenues après ladite segmentation initiale.

Le signal $S_1$ est donc reçu par les commutateurs 5 et 36, le signal $S_2$ par les circuits de sous-échantillonnage 45 à 48, le signal $S_3$ par le circuit de classement 401, le signal $S_4$ par le premier circuit de segmentation 75, et le signal $S_5$ par le deuxième circuit de segmentation 503.

Il faut bien noter, aussi, qu'on a choisi ici de décrire et de réaliser un dispositif de segmentation à quatre voies correspondant chacune à un filtrage morphologique distinct, mais que l'invention est déjà mise en oeuvre si elle comprend au moins une voie, ne correspondant dans ce cas qu'à un seul filtrage morphologique. Dans cet exemple simplifié de réalisation, les commutateurs 5 et 36 et l'additionneur 59 n'ont plus à être prévus. Cette réalisation à une seule voie permet de segmenter l'image en isolant une seule région du reste de cette image. Il faut également noter que, quel que soit le nombre des voies, la taille, la forme et l'orientation de l'élément structurant peuvent être modifiées, pour extraire tout type de caractéristique de texture, sans pour autant sortir du cadre de l'invention.

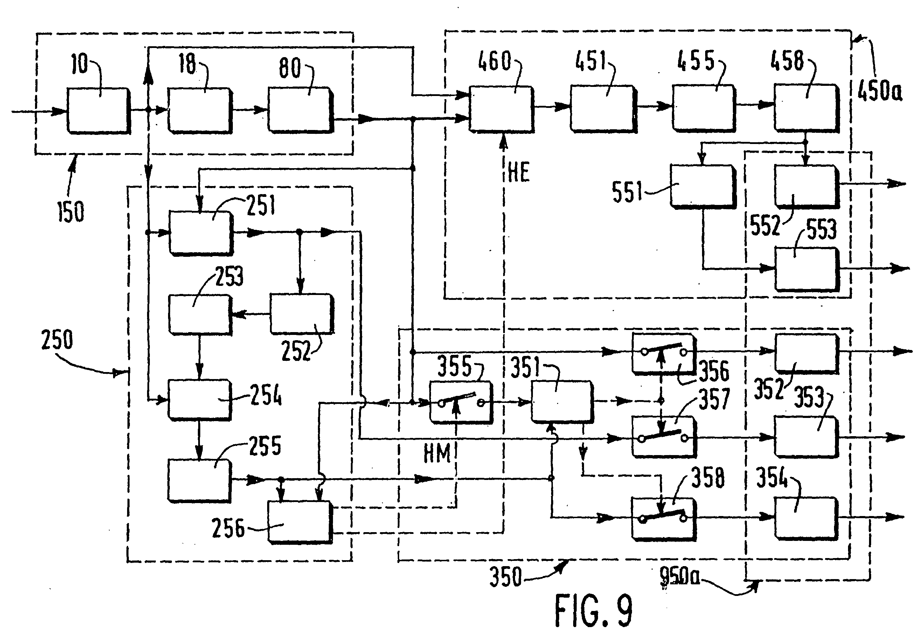

Le dispositif qui vient d'être décrit est adapté à la segmentation d'images qui ne sont composées que de textures. Cependant, le plus souvent toute image est formée d'une juxtaposition de régions texturées et de régions qui ne le sont pas. Un système de segmentation plus complet doit alors être prévu, et ce système, représenté sur la figure 9 dans un premier exemple de réalisation, comprend, dans cet exemple, les sous-ensembles suivants, à savoir, tout d'abord, un premier sous-ensemble 150 de segmentation de textures, identique au dispositif de segmentation décrit ci-dessus (figures 5 et 6). Les éléments du sous-ensemble 150 étant les mêmes que ceux du dispositif, on ne les fera pas tous apparaître sur la figure 9 : on se limitera à représenter la mémoire d'entrée 10, qui contient les signaux numériques représentatifs de l'image à segmenter, et la mémoire de sortie 80, qui contient l'image de labels permettant d'identifier les différentes régions issues de la segmentation de textures. Les circuits intermédiaires présents sur les figures 5 et 6 entre ces deux mémoires sont, sur cette figure 9, conventionnellement désignés par la référence 18.

Le processus de segmentation permis par ce sous-ensemble 150 conduit à une division de l'image en régions dont seulement certaines correspondent effectivement à des textures. Pour opérer la distinction entre ces régions et celles qui ne correspondent pas, ou pas seulement, à des textures, il est prévu un deuxième sous-ensemble 250 de séparation des régions.

Ce sous-ensemble 250 comprend tout d'abord un circuit d'approximation polynomiale 251, permettant d'associer à chaque région des attributs ou paramètres -ici plus particulièrement des polynômes bidimensionnels- à l'aide desquels est disponible une approximation analytique de chaque région. Cette opération permet de modéliser les variations lentes (basse fréquence) de la texture interne d'une région donnée telle qu'issue de la segmentation.

Ce circuit d'approximation polynomiale 251 est suivi d'un circuit de synthèse polynomiale 252, qui permet de restituer la fonction approximant la luminance de la région d'origine. Les signaux de sortie de ce circuit 252 sont stockés pour chaque région dans une mémoire 253 qu'on appellera par la suite, de façon abrégée, mémoire de l'image de polynômes. Un circuit de soustraction 254, qui reçoit les sorties de la mémoire 10 de l'image d'origine et de cette mémoire 253 de l'image de polynômes, détermine la différence résiduelle -ou résidu- entre la luminance d'origine de chaque région et la fonction polynomiale correspondante. Cette procédure permet d'extraire l'éventuelle composante basse fréquence qui peut être superposée à une texture dans une région déterminée (par exemple une ombre sur un toit composé de tuiles ou d'ardoises). Le résidu est stocké pour chaque région dans une mémoire 255, qui est suivi d'un premier circuit de test 256.

Ce test va permettre de séparer les régions issues de la segmentation initiale, réalisée par le sous-ensemble 150, en régions dites homogènes et en régions dites hétérogènes. Les régions dites homogènes sont ici celles qui sont considérées, après segmentation, comme uniquement composées de textures (on a déjà cité l'exemple des tuiles ou ardoises d'un toit, des briques d'un mur, etc...), même s'il s'y superpose une composante basse fréquence, ou bien celles qui sont uniquement (ou presque exclusivement, de faibles surfaces de texture pouvant y subsister) à variation lente de luminance. Les régions dites hétérogènes sont dans ce cas toutes les autres régions, c'est-à-dire celles qui ne comprennent aucune texture, ou qui n'en comprennent que de façon très minoritaire sur leur surface, et dont la segmentation n'est sans doute pas complète puisque le sous-ensemble 150 recherchant spécifiquement les régions texturées ne pouvait opérer efficacement sur elles (on verra plus loin pourquoi de telles zones texturées minoritaires peuvent exister dans ces régions). Pour une région hétérogène, le résidu a encore de fortes variations, une dynamique importante, car la fonction polynomiale n'a pas pu modéliser complètement les variations de luminance dans la région concernée. Au contraire, pour une région homogène en texture ou à variation lente de luminance, le résidu ne contient plus que l'information éventuelle de texture, et ses caractéristiques statistiques du premier ordre (moyenne, variance) sont pratiquement constantes. Le test effectué va donc, dans l'exemple ici décrit, consister à calculer une moyenne locale (on entend par locale une moyenne évaluée sur un voisinage de dimensions déterminées du point courant) en tout point de la région examinée et à vérifier comment varie cette moyenne (très faiblement, ou au contraire de façon importante). Si la région correspond exclusivement à une texture, cette moyenne locale reste toujours inférieure à un seuil. Si la région est hétérogène (parce qu'elle ne correspond pas, ou pas exclusivement, à une texture), la moyenne locale ne satisfait pas un tel critère. Le résultat du test est défini par ses deux signaux de sortie possibles HM et HE. Selon que ce signal est HM ou HE, la région concernée correspond seulement à une texture ou bien au contraire est hétérogène.

Le test de comparaison à un seuil peut porter simplement et directement sur la valeur de la différence résiduelle en tout point de la région concernée, ou bien au contraire sur d'autres types de grandeurs directement liées à cette différence résiduelle, sans que ce choix soit limitatif. Dans l'exemple décrit où le choix s'est porté sur une moyenne locale, ladite moyenne est évaluée par exemple sur un voisinage de 24 x 24 points d'image se déplaçant en tout point de la région. Dans ce déplacement, on veille cependant, ici, à ne pas prendre en compte les points dont le voisinage n'est pas inclus totalement dans la région. Pour vérifier que ladite moyenne locale ne varie pas trop, on en détermine la valeur maximale $Max(m_i)$ et la valeur minimale $Min(m_i)$,

avec $m_i$ = moyenne de la valeur résiduelle sur un voisinage centré sur le point i, et l'on vérifie que la différence $(Max(m_i) - Min(m_i))$ reste inférieure à un premier seuil $T_1$. Lorsque cette condition n'est pas vérifiée, la région concernée, qui est considérée comme hétérogène, doit donc être à nouveau segmentée (pour séparer les différentes régions homogènes à variation lente de luminance qui subsistent dans ces régions hétérogènes et qui, on peut le rappeler, peuvent cependant inclure, de façon minoritaire, de petites zones de texture), avant d'être éventuellement codée. Dans le cas contraire, la région est homogène et peut être traitée, et éventuellement codée, comme telle.

Le système selon l'invention comprend à cet effet, en sortie du deuxième sous-ensemble 250 de séparation des régions, un troisième sous-ensemble 350 de tri des régions homogènes en régions texturées et en régions à variation lente de luminance. Ce sous-ensemble 350 comprend lui-même tout d'abord un interrupteur de validation 355, fermé seulement s'il reçoit le signal de sortie HM du circuit de test 256, puis, en sortie de cet interrupteur, un deuxième circuit 351 de test par calcul, sur toute la région, de l'écart-type du résidu par rapport à la moyenne (qui doit en principe être nulle) et comparaison de cet écart-type à un deuxième seuil $T_2$. Si cet écart-type reste inférieur au seuil $T_2$, cela signifie que le résidu ne contient pas de texture et que la région concernée est seulement une région à variation lente (ou nulle) de la luminance. La modélisation s'arrête : en effet, les informations de contour (données par l'image de labels présente en mémoire 80) et de contenu de région (données par les coefficients polynomiaux extraits par le circuit 251) suffisent à définir cette région et peuvent, si des moyens de codage des diverses informations issues de la segmentation sont prévus dans le sous-ensemble 350, être respectivement envoyées, également par l'intermédiaire d'interrupteurs de validation 356 et 357 recevant du circuit 351 un signal de commande de leur fermeture, vers un circuit 352 de codage de contours et vers un circuit 353 de codage polynomial, qui délivrent alors des signaux codés correspondant à ce premier type de régions (régions homogènes à variation lente de luminance). Si au contraire l'écart-type ne reste pas inférieur à ce deuxième seuil $T_2$, la région concernée est une région texturée, et les informations de contour et de contenu de région sont cette fois, si lesdits moyens de codage sont prévus, fournies, également par l'intermédiaire d'un interrupteur de validation 358 recevant du circuit 351 un signal de commande de sa fermeture, à un circuit 354 de codage de région texturée.

Ce circuit 354, s'il est prévu, peut être par exemple du type des dispositifs de codage décrits dans les demandes de brevet européen EP 0545475 et EP 0547696, précédemment déposées par la société demanderesse, et ne sera donc pas décrit en détail. On rappellera simplement que le principe d'un tel codage repose sur le fait que des signaux de texture présentent un certain effet de répétition et que le prélèvement d'un échantillon de la texture peut suffire pour la reconstitution de toute cette texture. Plus précisément, ce codage consiste à extraire de la région un échantillon de M x N points d'image, qui est codé puis transmis et/ou stocké et qui simultanément sert à définir un dictionnaire à partir de blocs, de même taille en général, extraits de l'échantillon, et à transmettre pour chaque bloc de toute la région concernée l'adresse du bloc le plus proche dans le dictionnaire (la proximité étant définie par exemple par évaluation de la distance quadratique minimale).

Un tel codage ne présente par contre plus tellement d'intérêt lorsque des régions texturées sont de trop faible surface. C'est pour cette raison que, lors de la segmentation en régions texturées on accepte qu'il subsiste, dans les régions considérées après ladite segmentation comme non texturées, des zones texturées de surface minoritaire par rapport à la surface du reste de la région où se trouvent de telles zones. En effet, ces faibles surfaces sont, de fait, voisines de ou inférieures à celle de l'échantillon de texture qui serait extrait d'une telle zone, alors que ce procédé de codage (par extraction d'échantillon, transmission de celui-ci, et synthèse de la région à reconstituer par recherche des blocs les plus proches dans un dictionnaire préconstitué) n'est vraiment intéressant et économique que si la surface de cette région est nettement plus grande que celle de l'échantillon qui lui correspond. Il est donc tout à fait admissible que le dispositif initial de segmentation d'images composées de textures prévoit une approche multi-résolution n'impliquant pas, initialement, une capture des petites régions texturées.

Lorsque la région considérée est au contraire hétérogène, on a vu qu'elle devait être à nouveau segmentée, avant d'être éventuellement codée. Pour cette opération, le système selon l'invention comprend, également en sortie du sous-ensemble 250 de séparation des régions, un quatrième sous-ensemble 450a de segmentation complémentaire des régions hétérogènes. Ce sous-ensemble 450a comprend en série, dans l'exemple ici décrit, un circuit 460 de sélection exclusive des régions hétérogènes, qui reçoit d'une part les sorties des mémoires 10 et 80 et d'autre part le signal de sortie HE du circuit de test 256, une mémoire 451 de stockage de ces régions hétérogènes, un dispositif de segmentation complémentaire 455 de type classique, une mémoire 458 de stockage de l'image de labels résultant de ladite segmentation, et un circuit 551 d'approximation polynomiale, recevant également la sortie de ladite mémoire 451 et de structure identique à celle du circuit 251. Si des moyens de codage des diverses informations de segmentation sont prévus dans le sous-ensemble 450a, ils comprennent alors, ici, en série avec le circuit 551, un circuit 553 de codage polynomial identique au circuit 353, ainsi que, également en série avec la mémoire 458 mais en parallèle sur le tronçon comprenant les circuits 551 et 553, un circuit 552 de codage de contour. Les circuits 552 et 553 délivrent les signaux codés correspondant à chacune des régions issues de la segmentation complémentaire des régions hétérogènes et qui sont maintenant des régions homogènes à variation lente de luminance.

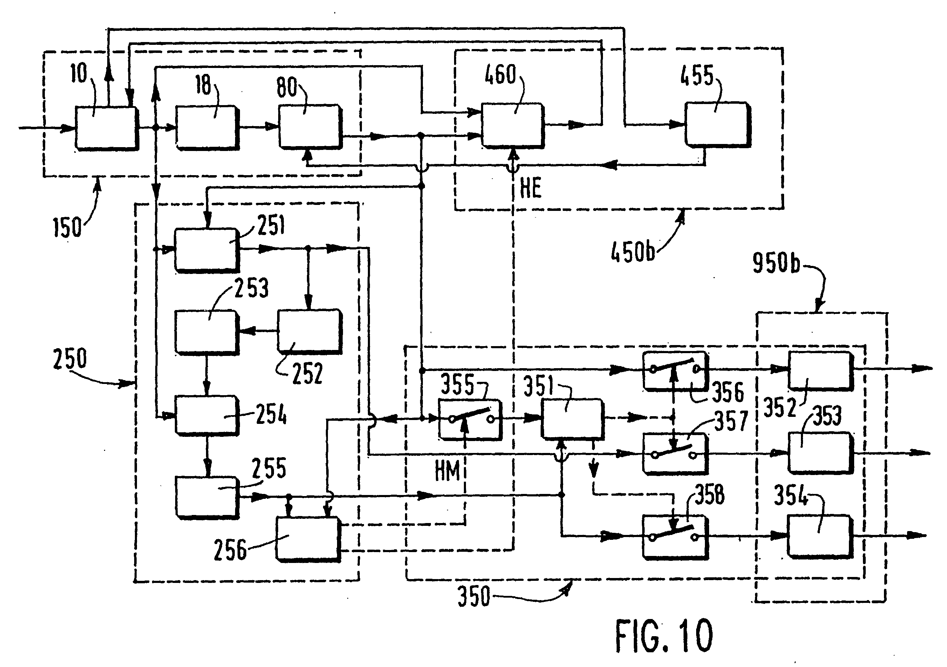

Par ailleurs, dans le cas du système de segmentation d'images représenté sur la figure 9, il est possible de réduire le nombre des circuits, et donc le coût du système, ce qui est réalisé avec la variante simplifiée de ce système représentée sur la figure 10. Dans le quatrième sous-ensemble de segmentation complémentaire des régions hétérogènes, qui porte maintenant la référence 450b, la sortie du circuit 460 de sélection exclusive des régions hétérogènes est envoyée non plus vers la mémoire 451, qui n'est plus prévue, mais vers la première mémoire 10 de stockage des signaux numériques représentatifs de l'image initiale à segmenter. Une sortie de cette mémoire 10 est maintenant envoyée vers le dispositif de segmentation complémentaire 455. La sortie de ce dispositif 455 est envoyée non plus vers la mémoire 458, qui n'est plus prévue, mais vers la huitième mémoire 80 de stockage de l'image de labels, dans laquelle est désormais présente, après ladite segmentation complémentaire, la nouvelle image de labels correspondant à l'ensemble des régions identifiées au cours de l'ensemble des opérations de segmentation réalisées. Le codage éventuel des diverses informations de segmentation, qui, dans le sous-ensemble 450a, était réalisé par les circuits 552 et 553, est maintenant effectué par les circuits 352 et 353.

On notera encore que l'ordre des polynômes ainsi que les seuils ne sont pas fixés une fois pour toutes. Ces valeurs peuvent être modifiées par l'intermédiaire des commandes (non représentées sur les figures) en provenance de l'étage de séquencement 600 du dispositif de segmentation.

Enfin on a décrit ici simplement un dispositif et un système de segmentation, mais il est manifeste que ce système de segmentation peut inclure les moyens de codage des diverses informations délivrées à la suite des opérations de segmentation et qui correspondent respectivement à chacune des régions identifiées. De tels moyens de codage ont été mentionnés au fur et à mesure de la description, en signalant leur caractère éventuel, et comprennent, plus précisément, les circuits 352 à 354 et les circuits 552 et 553. Il est même possible de remplacer les circuits 352 et 552, qui sont identiques, par un circuit unique exécutant la même fonction, ainsi que les circuits 353 et 553, qui sont également identiques, par un autre circuit unique. Avec ou sans ce remplacement, les moyens de codage peuvent, au lieu d'être incorporés dans les sous-ensembles 350 ou 450a ou 450b, être regroupés en un sous-ensemble de codage, représenté sur les figures 9 et 10 avec la référence 950a ou 950b respectivement.

**Revendications**

1. Dispositif de segmentation d'images composées de textures à partir de signaux numériques représentatifs desdites images et par caractérisation de chaque texture à l'aide de paramètres qui en sont représentatifs et décomposition de chaque image en régions associées aux différentes textures, ledit dispositif comprenant :

    (A) pour ladite caractérisation de texture, un sous-ensemble (100) de filtrage morphologique directionnel suivi d'un sous-ensemble (200) de détermination de paramètres de texture ;
    (B) en sortie dudit sous-ensemble de détermination de paramètres, un sous-ensemble (300) de segmentation en régions, par la technique dite d'extraction de lignes de partage des eaux appliquée à une image de paramètres de texture subdivisée en blocs de taille déterminée ;
    (C) un étage (600) de séquencement, pour la fourniture des différents signaux de commande desdits sous-ensembles ;

    ledit dispositif étant en outre **caractérisé en ce que** :

    (A) ledit sous-ensemble (100) de filtrage morphologique directionnel comprend :

        (a) une première mémoire (10) des signaux numériques représentatifs de l'image à segmenter ;
        (b) en sortie de cette première mémoire, un premier commutateur (5) à quatre positions suivi, en parallèle, de quatre circuits de filtrage morphologique directionnel (11, 12, 13, 14) ;
        (c) une deuxième mémoire (20) de stockage des quatre images filtrées successivement obtenues ;
        (d) un soustracteur (25) et, en sortie de celui-ci, une troisième mémoire (30) de stockage de quatre images de résidu obtenues successivement par différence entre l'image originale et chacune des quatre images filtrées ;

    (B) ledit sous-ensemble (200) de détermination de paramètres de texture comprend :

        (e) un circuit (35) d'intégration des images de résidu ;
        (f) en sortie de celui-ci, un deuxième commutateur (36) à quatre positions, suivi de quatre branches en parallèle comprenant elles-mêmes chacune, en série, une quatrième mémoire de stockage de l'image de caractéristiques de texture associée au filtrage correspondant, un circuit de sous-échantillonnage spatial de cette image, un circuit de calcul de gradient morphologique, et une cinquième mémoire de stockage dudit gradient ;
        (g) un additionneur (59) des sorties desdites cinquièmes mémoires ;
        (h) une sixième mémoire (60) de stockage du gradient dit global présent en sortie dudit additionneur.

2. Dispositif de segmentation selon la revendication 1, **caractérisé en ce qu'**il comprend, en sortie du sous-ensemble de segmentation, un sous-ensemble (500) d'affinement de contours par renouvellement d'extractions de lignes de partage des eaux pour des subdivisions de l'image en blocs de taille plus faible, et ceci de façon itérative jusqu'à la résolution d'un point d'image.

**Patentansprüche**

1. Vorrichtung zur Segmentierung von aus Texturen bestehenden Bildern anhand von die besagten Bilder darstellenden digitalen Signalen und durch Kennzeichnung jeder Textur mit Hilfe von darstellenden Parametern und Zergliederung jedes Bilds in mit den besagten Texturen verbundene Regionen, wobei die besagte Vorrichtung enthält:

    (A) Für die besagte Kennzeichnung der Textur eine Untereinheit.(100) zur direktionalen morphologischen Filterung gefolgt von einer Untereinheit (200) zur Bestimmung von Texturparametern;
    (B) am Ausgang der besagten Untereinheit zur Bestimmung von Parametern eine Untereinheit (300) zur Segmentierung in Regionen mit der so genannten Technik zur Extraktion von Wasserscheidelinien, auf ein Bild mit in Blöcke bestimmter Größe unterteilten Texturparameter angewendet;
    (C) eine Sequenzierungsstufe (600) für die Ausgabe der verschiedenen Steuersignale der besagten Untereinheiten;

    wobei die besagte Vorrichtung außerdem **dadurch gekennzeichnet ist, dass**:

    (A) Die besagte Untereinheit (100) zu direktionalen morphologischen Filterung enthält:

        (a) Einen ersten Speicher (10) der das zu segmentierende Bild darstellenden digitalen Signale;

(b) am Ausgang dieses ersten Speichers einen ersten Umschalter (5) mit vier Positionen, parallel gefolgt von vier direktionalen morphologischen Filterschaltungen (11, 12, 13, 14);
(c) einen zweiten Speicher (20) zur Ablage der nacheinander erhaltenen vier Bilder;
(d) einen Subtrahierer (25) und an dessen Ausgang einen dritten Speicher (30) zur Ablage von vier Restbildern, nacheinander über die Differenz zwischen dem Originalbild und den jeweils vier gefilterten Bildern erhalten;

(B) die besagte Untereinheit (200) zur Bestimmung von Texturparametern enthält:

(e) Eine Schaltung (35) zur Integration der Restbilder;
(f) an deren Ausgang einen zweiten Umschalter (36) mit vier Positionen gefolgt von vier parallelen Zweigen mit jeweils in Serie einem vierten Speicher zur Ablage des Bildes charakteristischer Textur in Verbindung mit einer entsprechenden Filterung, einer räumlichen Untermusterungsschaltung dieses Bildes, einer Schaltung zur Berechnung des morphologischen Gradienten und einem fünften Speicher zur Ablage des besagten Gradienten;
(g) einen Addierer (59) der Ausgänge des besagten fünften Speichers;
(h) einen sechsten Speicher(60) zur Ablage des so genannten globalen, am Ausgang des besagten Addierers vorhandenen Gradienten.

2.  Vorrichtung zur Segmentierung nach Anspruch 1, **dadurch gekennzeichnet, dass** sie am Ausgang der Untereinheit zur Segmentierung eine Untereinheit (500) zur Verfeinerung der Konturen durch Erneuerung der Extraktionen der Wasserscheidelinien für die Unterteilung des Bildes in Blöcke geringerer Größen enthält, und dies auf iterative Weise bis zur Auflösung eines Bildpunktes.

**Claims**

1.  A device for segmenting textured images on the basis of digital signals which are representative of said images by characterization of each texture by means of representative parameters and by decomposition of each image into regions associated with different textures, said device comprising:

(A) for said characterization of the texture, a sub-assembly (100) for directional morphological filtering, followed by a sub-assembly (200) for determining the texture parameters;
(B) at the output of said sub-assembly for determining the parameters, a sub-assembly (300) for segmentation into regions by means of the technique of extracting watershed lines in a texture parameter image subdivided into blocks of a given size;
(C) a sequencing stage (600) for furnishing the different control signals of said sub-assemblies;

said device being **characterized in that**:

(A) said directional morphological filtering sub-assembly (100) comprises:

(a) a first memory (10) for storing the digital signals which are representative of the image to be segmented;
(b) at the output of this first memory, a first four-position switch (5) followed by a parallel arrangement of four directional morphological filtering circuits (11, 12, 13, 14);
(c) a second memory (20) for storing the four successively filtered images obtained;
(d) a subtracter (25) and, at its output, a third memory (30) for storing the four images of the residues successively obtained from the difference between the original image and each of the four filtered images;

(B) said sub-assembly (200) for determining the texture parameters comprises:

(e) a circuit (35) for integrating the images of the residues;
(f) at the output of said circuit, a second four-position switch (36) followed by four parallel branches each comprising a series arrangement of a fourth memory for storing the image of the texture characteristics associated with the corresponding filtering operation, a circuit for spatial sub-sampling of this image, a circuit for computing the morphological gradient, and a fifth memory for storing said gradient;
(g) an adder (59) for the output signal of said fifth memories;
(h) a sixth memory (60) for storing the global gradient present at the output of said adder

2.  A segmentation device as claimed in claim 1, **characterized in that** it comprises, at the output of the segmentation sub-assembly, a sub-assembly (500) for sharpening the contours by repeating the extractions of the watershed lines for subdivisions of the image into blocks of a smaller size, and this in an iterative way until the resolution of a pixel is reached.

FIG. 1

FIG. 2

FIG. 3

FIG. 4

FIG.5

FIG. 6

EP 0 627 693 B1

FIG. 7

FIG. 8

FIG. 9

FIG. 10